Europäisches Patentamt

European Patent Office

Office européen des brevets

(11) Numéro de publication: **0 217 715 B1**

# FASCICULE DE BREVET EUROPEEN

(45) Date de publication de fascicule du brevet:
**12.06.91**

(51) Int. Cl.⁵: **A01F 15/00**

(21) Numéro de dépôt: **86402149.8**

(22) Date de dépôt: **01.10.86**

(54) Ejecteur de balles rondes de fourrage.

(30) Priorité: **01.10.85 FR 8514522**

(43) Date de publication de la demande:
**08.04.87 Bulletin 87/15**

(45) Mention de la délivrance du brevet:
**12.06.91 Bulletin 91/24**

(84) Etats contractants désignés:
**DE ES GB IT NL**

(56) Documents cités:
**EP-A- 0 104 510      DE-A- 3 236 861**
**DE-A- 3 247 661      GB-A- 830 151**
**GB-A- 2 039 251      US-A- 3 974 632**

(73) Titulaire: **ETABLISSEMENTS BOUVRY**
**Route d'Argentan B.P. 15**
**F-61500 Sees(FR)**

(72) Inventeur: **Bloyet, Jacques**
**Chiffreville**
**F-61200 Sevigny(FR)**
Inventeur: **Gaubert, Bernard**
**La Grande Ferriere**
**F-61250 Radon(FR)**

(74) Mandataire: **Rinuy, Santarelli**
**14, avenue de la Grande Armée**
**F-75017 Paris(FR)**

## Description

La présente invention se rapporte au domaine des machines agricoles et plus particulièrement aux machines ramasseuse-presses formant des balles sensiblement rondes, communément appelées "Round Baler", et appelées par commodité "ramasseuses" dans ce qui suit.

L'invention se rapporte plus particulièrement aux ramasseuses du type comportant un compartiment de formation de la balle fermé par une porte articulée autour d'un axe horizontal situé à sa partie supérieure et commandée par un dispositif d'ouverture et de fermeture.

On sait que ces ramasseuses sont remorquées par un tracteur et qu'elles comportent un dispositif de ramassage de la paille, du foin, du chanvre, du lin, de l'herbe ou de l'ensillage. Par commodité nous appelerons "fourrage" tous végétaux fauchés susceptibles d'être ramassés ou pressés en balles par les ramasseuses.

Le fourrage ramassé est introduit dans le compartiment de travail de la ramasseuse où il est pressé et roulé en spirale jusqu'à la dimension voulue. Le tracteur est alors arrêté et il est procédé dans le compartiment de travail à une opération de liage de la balle ronde ainsi formée, ce qui lui permettra de conserver sa forme par la suite.

La ramasseuse doit alors être reculée, ce qui a pour effet de la faire revenir sur une portion de champ où le fourrage a déjà été ramassé puis l'ouverture de la porte est déclenchée, la balle tombe hors du compartiment de travail sous l'effet de son poids et reste en général sous la porte. Il faut alors repartir vers l'avant jusqu'à une position où la porte puisse se refermer librement avant de ramasser à nouveau du fourrage.

Cette manoeuvre de recul est obligatoire car ces machines ne peuvent ramasser du fourrage que si la porte du compartiment de travail est fermée. Ce ne serait pas le cas sans cette manoeuvre de recul car la ramasseuse devrait avancer pour se dégager de la balle sur une portion de champ où le fourrage n'a pas été ramassé.

Cette obligation de reculer avant que soit déclenchée la sortie de la balle présente un certain nombre d'inconvénients tels qu'une perte de temps, une fatigue accrue du chauffeur, une usure accélérée de l'embrayage du tracteur et une difficulté d'emploi de la ramasseuse.

On a déjà proposé (voir DE-A-3 247 661) un dispositif d'éjection de la balle hors du compartiment de travail, à une distance suffisante pour qu'il soit possible de refermer librement la porte.

Ce dispositif antérieur est particulièrement complexe. Il comporte en effet un poussoir mobile installé en avant de la ramasseuse et muni d'une partie transversale qui peut pénétrer dans le compartiment de travail pour pousser la balle confectionnée vers la sortie ; une rampe de lancement de la balle vers le sol disposée à la sortie du compartiment de travail, comportant deux parties s'inclinant successivement ; une tringlerie à barres articulées multiples pour mettre en mouvement le poussoir mobile et la rampe de lancement de telle sorte que lors de l'ouverture de la porte du compartiment de travail le bout du poussoir arrête la rotation de la balle confectionnée puis la pousse vers la sortie du compartiment de travail où la première partie de la rampe de lancement est alors inclinée vers le sol tandis que la deuxième partie est contre le sol, puis que quand la balle a quitté la première partie pour se trouver sur la deuxième partie de la rampe de lancement, l'articulation entre les deux parties de la rampe de lancement se soulève ce qui pousse la balle hors de la zone de fermeture de la porte du compartiment de travail.

L'invention propose que la ramasseuse soit munie d'un éjecteur comportant un poussoir mobile, des organes d'entraînement dudit poussoir vers la sortie du compartiment de formation des balles, et une rampe de lancement de la balle vers le sol disposée à la sortie de ce compartiment : et qu'elle se caractérise en ce que le poussoir mobile de l'éjecteur est disposé sous le compartiment de formation des balles.

Selon une forme de réalisation préférée de l'invention, un châssis solidarisé au bâti de la machine est prévu pour le montage du poussoir et de la rampe de lancement et ceux-ci sont mobiles en rotation, le poussoir pivotant vers la sortie du compartiment de travail et la rampe s'inclinant vers le sol lors de l'éjection d'une balle, ladite rampe étant maintenue au repos en position sensiblement horizontale.

Dans une forme de réalisation particulièrement avantageuse de l'invention, les organes d'entraînement du poussoir mobile comprennent des éléments de liaison utilisant le mouvement de débattement de la porte pour entraîner le poussoir mobile.

Selon une autre forme de réalisation avantageuse les organes d'entraînement du poussoir mobile comprennent des éléments reliés à une source de pression hydraulique utilisée pour entraîner le poussoir mobile.

Les caractéristiques et avantages de la présente invention ressortiront de la description qui va suivre en référence aux dessins annexés sur lesquels :

- la figure 1 est une vue schématique de profil d'une ramasseuse selon l'état de la technique;
- la figure 2 est une vue schématique en perspective d'un mode de réalisation préféré de l'éjecteur objet de la présente invention, comportant des organes d'entraînement mécaniques;

- la figure 3 est une vue schématique de profil d'une ramasseuse équipée du mode de réalisation de l'éjecteur représenté en figure 2, la ramasseuse étant en cours de ramassage du fourrage et de confection de la balle;
- la figure 4 est une vue schématique de profil d'une ramasseuse équipée du mode de réalisation de l'éjecteur représenté en figure 2, la machine étant immobile et la balle confectionnée roulant sur la rampe de lancement après avoir été poussée par l'éjecteur;
- la figure 5 est une vue schématique interrompue en perspective d'un autre mode de réalisation préféré de la rampe de lancement;
- la figure 6 est une vue schématique interrompue en perspective d'un autre mode de réalisation préféré du poussoir mobile;
- la figure 7 est une vue de profil d'un oeillet de liaison faisant partie d'une autre forme de réalisation mécanique des organes d'entraînement du poussoir mobile;
- la figure 8 est une vue schématique de profil d'une ramasseuse équipée d'un autre mode de réalisation préféré de l'éjecteur objet de la présente invention, comportant des organes d'entraînement hydrauliques, la ramasseuse étant immobile et la balle confectionnée roulant sur la rampe de lancement après avoir été poussée par l'éjecteur;
- la figure 9 est un schéma des circuits hydraulique et électrique préférés correspondant au mode de réalisation représenté à la figure 8;

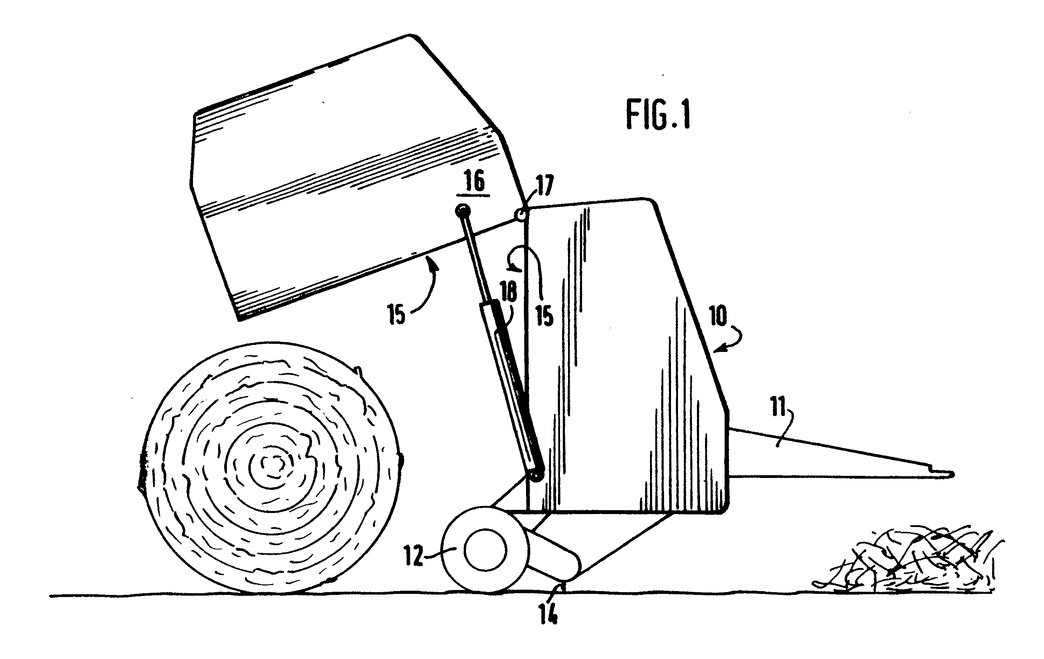

On va tout d'abord décrire en référence à la figure 1 une ramasseuse 10 en soi connue destinée à recevoir l'éjecteur selon la présente invention.

Cette machine comporte essentiellement un bras de remorquage 11 au moyen duquel elle est fixée au tracteur destiné à la remorquer, des prises de force et de pression hydraulique reliées aux dispositifs correspondants sur le tracteur, des roues 12 dont les moyeux sont fixés sur des poutres latérales fixées elles-mêmes sur le bâti de la ramasseuse 10, un dispositif de ramassage du fourrage 14, le fourrage étant introduit dans le compartiment de travail 15 où il est pressé et roulé en spirale jusqu'à la dimension voulue. Le compartiment de travail 15 comprend une porte en forme de caisson 16 articulée en 17 autour d'un axe horizontal et commandée par des vérins hydrauliques 18. Lorsque la balle a atteint la dimension voulue la ramasseuse 10 est immobilisée et il est procédé dans le compartiment de travail 15 à une opération de liage de la balle ainsi formée, ce qui lui permettra de conserver sa forme par la suite. La ramasseuse doit alors être reculée puis l'ouverture de la porte est déclenchée et la balle tombe hors du compartiment de travail sous l'effet de son poids. Il faut alors repartir vers l'avant pour refermer la porte avant de ramasser à nouveau du foin.

L'ensemble de ces dispositions est bien connu de l'homme de l'art et n'a donc pas besoin d'être décrit plus en détails ici.

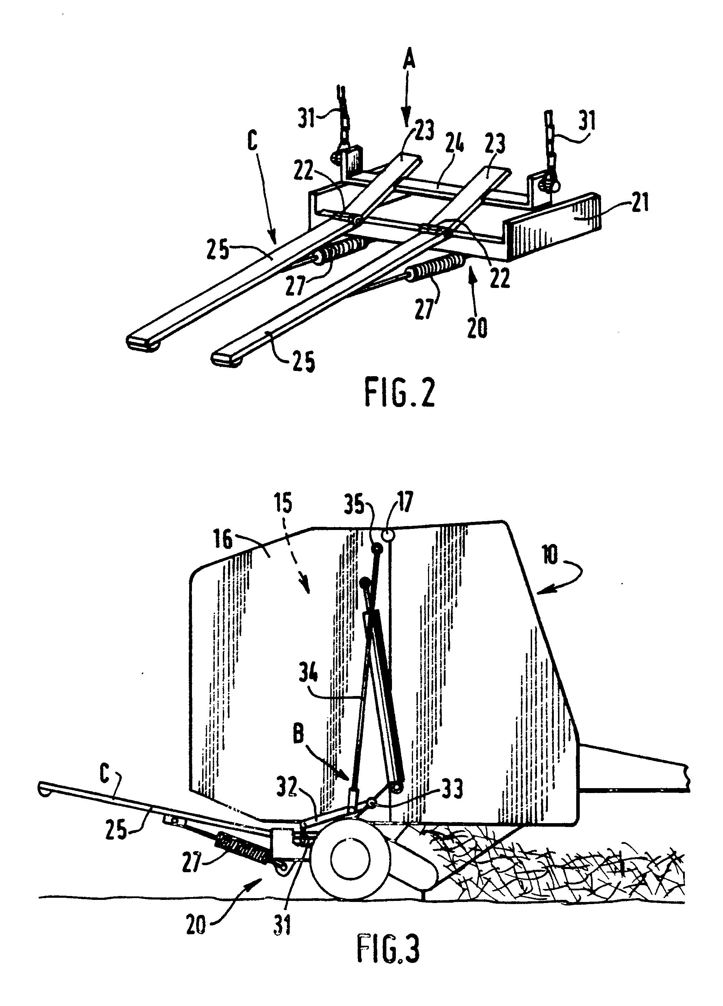

L'éjecteur 20 selon l'invention, représenté sur les figures 2 à 4 et 8, comprend essentiellement un poussoir mobile A monté sur un châssis 21, ce poussoir étant entraîné par des organes d'entraînement désignés par la référence générale B et une rampe de lancement C de la balle confectionnée, montée sur le châssis, celui-ci étant fixé sur les poutres latérales où sont fixés les moyeux des roues 12 de la ramasseuse 10 de façon à se trouver sous le compartiment de travail 15. Ce châssis 21 comporte deux axes 22 sur lesquels s'articule le poussoir mobile A constitué selon le mode de réalisation montré en figure 2, de deux bras éjecteurs 23 reliés par une barre 24. Selon une autre forme avantageuse de réalisation non représentée le poussoir peut être constitué d'une plaque articulée sur le châssis. Ce poussoir mobile pivote vers la sortie du compartiment de travail 15 lorsqu'il est mis en mouvement par des organes d'entraînement B. Une rampe de lancement C constituée par deux bras de lancement 25 est articulée sur les axes 22 et est ainsi disposée à la sortie du compartiment de travail 15, ces bras de lancement 25 sont sollicités en position sensiblement horizontale au moyen de ressorts 27 d'une façon bien connue de l'homme de l'art.

Le poussoir mobile agit après un certain débattement de la porte sur la balle de fourrage de façon à la pousser avec la force nécessaire sur les bras de lancement 25 qui s'inclinent vers le sol sous le poids de la balle qui roule sur le sol jusqu'à une distance suffisante pour ne pas gêner la fermeture de la porte 16. Après le passage de la balle les bras de lancement 25 reviennent à leur position première sous l'effet des ressorts.

Les organes d'entraînement B du poussoir mobile peuvent être avantageusement constitués par deux ensembles d'éléments de liaison utilisant le mouvement de débattement de la porte, chacun des ensembles étant disposé symétriquement de chaque côté de la ramasseuse.

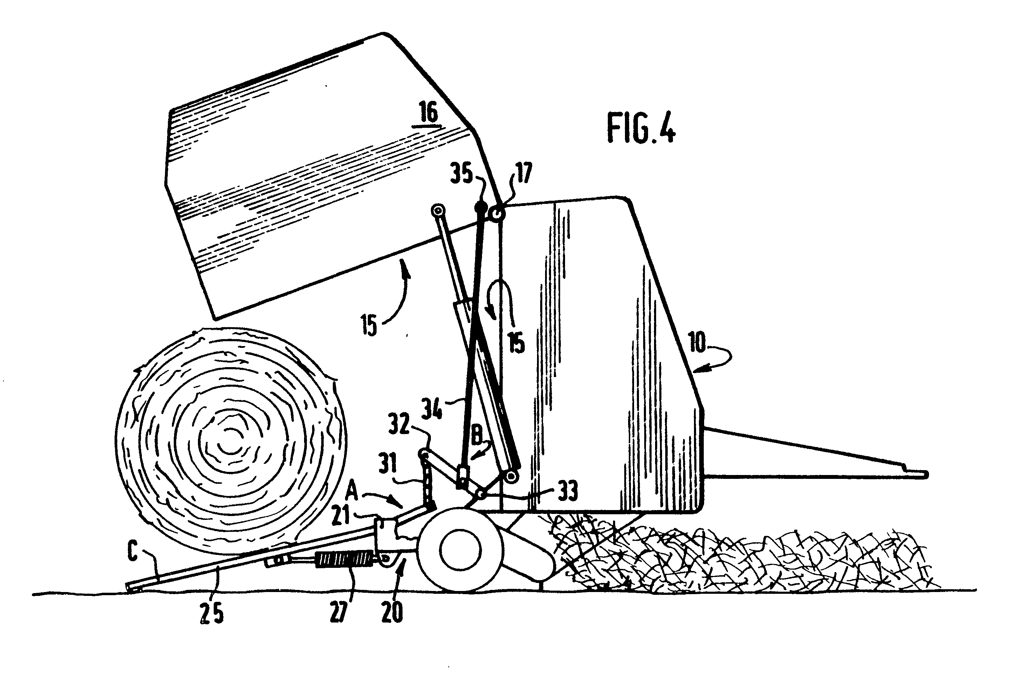

Dans un but de simplification, on ne décrira qu'un seul de ces ensembles qui est représenté sur les figures 3 et 4.

La barre 24 du poussoir mobile A est reliée à l'une des extrémités d'une chaîne 31 par l'intermédiaire d'une biellette. L'autre extrémité de la chaîne est reliée à l'une des extrémités du bras mobile 32, ce bras étant articulé à son autre extrémité autour d'un axe 33 fixé sur le bâti latéral de la ramasseuse 10.

Une biellette relie le bras mobile 32 à une tige 34 elle-même fixée sur la porte 16 au moyen d'une axe 35 monté en-dessous du point d'articulation 17.

Lors de l'ouverture de la porte 16,la balle descend sur l'éjecteur 20. La tige 34 qui est entraînée par la porte d'un mouvement sensiblement vertical, a pour effet de tirer vers le haut le bras 32 qui transmet ce mouvement à la chaîne 31, ce qui fait pivoter le poussoir mobile A qui soulève alors la balle énergiquement et la fait rouler sur la rampe de lancement C. La ramasseuse 10 est alors dans la position représentée en figure 4.

Le bras 32 constitue un bras de levier qui permet de diminuer l'effort à exercer pour éjecter la balle.

La position de l'axe 35 et les longueurs des chaînes 31 et des tiges 34 sont choisies de telle façon que l'action de l'éjecteur n'est déclenchée que lorsque la porte 16 a atteint une ouverture suffisante pour ne pas gêner l'éjection de la balle. Les chaînes 31 et les tiges 34 sont réglables en longueur de façon à régler l'éjection de la balle plus ou moins loin suivant le terrain où la machine est utilisée. Le réglage en longueur de la tige 34 peut être effectué, par exemple, au moyen d'un raccord fileté en prise avec l'extrémité filetée de la tige et celle de la biellette reliant la tige au bras 32.

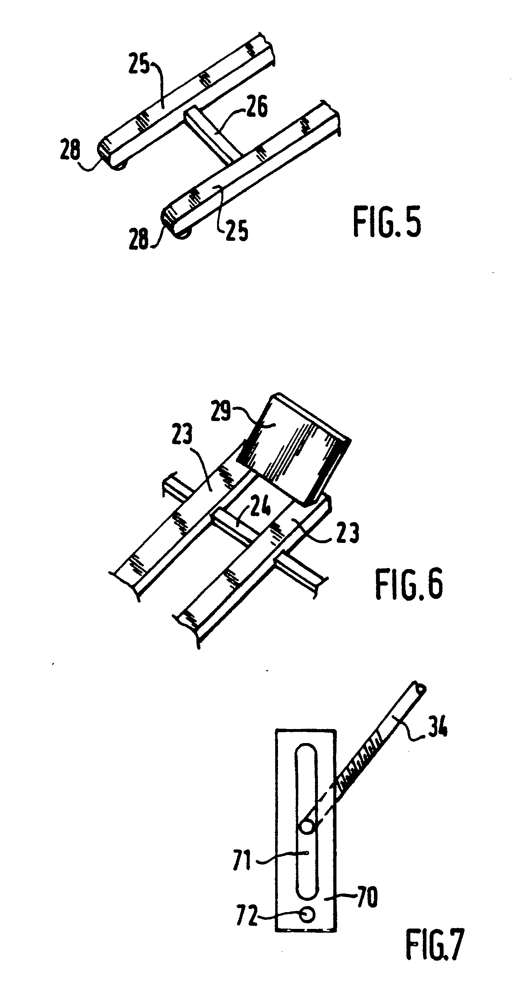

La rampe de lancement C peut recevoir les dispositifs représentés sur la figure 5 : les bras de lancement 25 sont rendus solidaires au moyen d'une barre 26, ce qui leur permet de garder sensiblement la même inclinaison par rapport à l'horizontale. Cette caractéristique est particulièrement avantageuse sur un terrain en pente latérale car elle assure que la balle roulera sur les deux bras de la rampe, alors que des bras non solidaires auraient pris, du fait de la pente, des inclinaisons différentes lors du passage de la balle, ce qui gênerait le parfait roulement de celle-ci.

L'adjonction de patins 28 de forme arrondie disposés en bout et sur la face inférieure des bras 25 offre l'avantage d'éviter que les bras 25 ne se plantent dans le champ lors d'une manoeuvre de recul sur terrain en pente, ce qui pourrait provoquer des détériorations à la rampe de lancement et même à l'éjecteur.

Le poussoir mobile A, tel que représenté en figure 6, peut être équipé d'une plaque 29 fixée à son extrémité libre de telle façon que les faces en contact avec la balle de la plaque 29 du poussoir fassent entre elles un angle obtu. Ce dispositif permet une meilleure réception et un meilleur positionnement de la balle sur le poussoir mobile.

Une autre forme de réalisation des organes d'entraînement mécaniques décrit sur les figures 2 à 4 consisterait à remplacer la chaîne 31 et le bras mobile 32 par un oeillet 70 montré en figure 7. Cet oeillet comporte un trou oblong 71 dans lequel se déplace la fixation de l'extrémité de la tige 34, l'oeillet étant relié en 72 au poussoir mobile A.

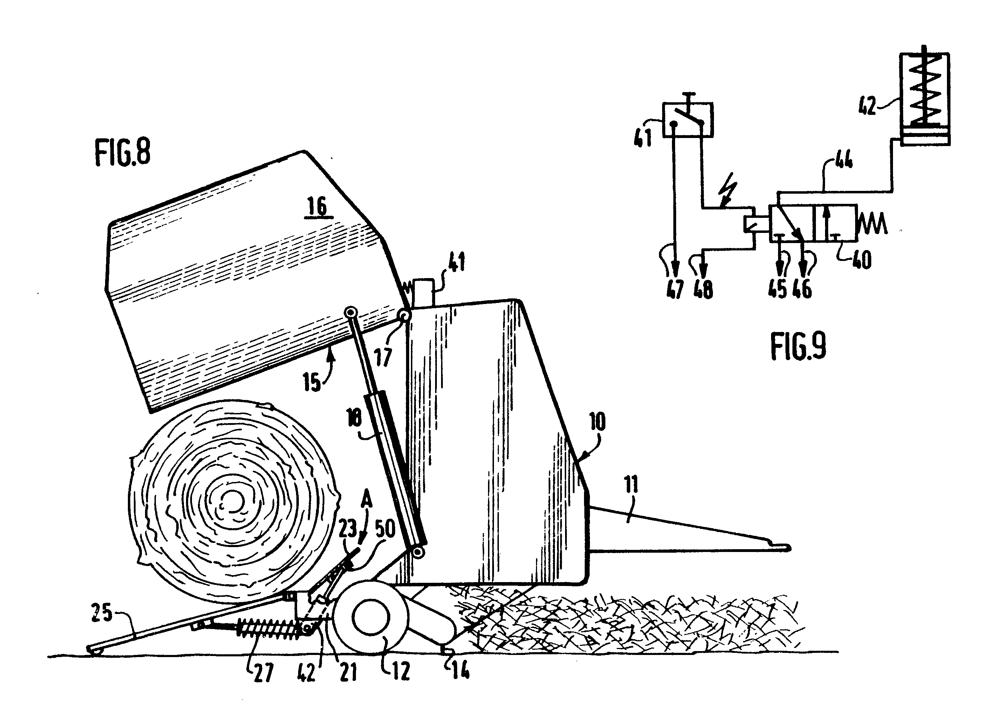

On va maintenant décrire à l'aide des figures 8 et 9 un mode de réalisation et le fonctionnement des organes d'entraînement du poussoir mobile A de l'éjecteur, ces organes comprenant de éléments reliés à une source de pression hydraulique utilisée pour entraîner le poussoir mobile.

Plus précisément, et tel que montré sur la figure 8, un vérin hydraulique 42 s'articule d'une part sur le châssis 21 de l'éjecteur et d'autre part sur le poussoir mobile A.

Plusieurs lieux sont prévus sur le poussoir pour cette articulation afin de régler sa course, celle-ci correspondant à la force d'éjection appliquée à la balle. Un mode de réalisation préféré de ce dispositif de réglage est repéré 50 sur la figure 8, et montre trois alésages destinés à recevoir l'axe d'articulation. Le vérin 42 est relié à une source de pression hydraulique, en l'occurrence le circuit hydraulique du tracteur, un distributeur assurant la commande de ce vérin. Ce peut, selon un mode de réalisation, être un distributeur du circuit hydraulique du tracteur manoeuvré par le chauffeur qui déclenche ainsi l'action de l'éjecteur lorsque la balle sort du compartiment de travail puis son retour en position de repos avant la fermeture de la porte.

Selon un autre mode de réalisation plus avantageux le vérin 42 est commandé par une électrovanne, elle-même commandée par un contact 41 dont l'emplacement est situé sur la figure 8, fermé ou ouvert après un débattement initial de la porte, à l'ouverture puis à la fermeture de celle-ci. Ce débattement initial est réglable en fonction de la position du contact par rapport à la porte.

Ainsi qu'il est représenté sur la figure 9 qui montre les schémas de ce mode de réalisation hydraulique préféré des organes d'entraînement du poussoir, le contact 41 est relié par le câble 47 au pôle positif du circuit électrique du tracteur, et à l'électro-aimant de l'électrovanne, ce dernier étant relié au pôle négatif par le câble 48, câble qui peut d'ailleurs être remplacé par la masse commune du tracteur et de la ramasseuse reliée elle-même au pôle négatif. Le distributeur 40 est relié à la pompe du circuit hydraulique par la conduite 45, au réservoir par la conduite 46 et au vérin 42 par la conduite 44. Lorsque le contact 41 est fermé au cours de l'ouverture de la porte 16, la pompe alimente le vérin 42, ce qui déclenche l'action de l'éjecteur. Au cours de la fermeture de la porte le contact 41 s'ouvre, le vérin 42 est relié au réservoir, ce qui a pour effet de faire revenir en position de repos le poussoir, sous l'action du ressort du vérin.

Il est bien entendu que le vérin 42 pourrait tout aussi bien être un vérin double effet, commandé par une électrovanne adéquate, elle-même commandée par le contact à inverseur nécessaire.

De même la présente invention ne se limite pas aux modes de réalisations choisis et représentés sur les figures mais englobe toute variante que l'homme de l'art pourra déterminer sans pour cela sortir du cadre de protection défini par les revendications.

**Revendications**

1. Machine agricole ramasseuse-presse (10) formant des balles de fourrage sensiblement rondes, du type comportant un compartiment (15) de formation des balles comprenant une porte en forme de caisson (16) articulée autour d'un axe horizontal situé à sa partie supérieure et commandée par un dispositif d'ouverture et de fermeture ; ladite machine comprenant en outre un éjecteur destiné à pousser hors de la machine une balle confectionnée, comportant un poussoir mobile, des organes d'entraînement dudit poussoir vers la sortie du compartiment (15) de formation des balles, et une rampe de lancement de la balle vers le sol disposée à la sortie de ce compartiment ; cette machine étant caractérisée en ce que le poussoir mobile (A) de l'éjecteur (20) est disposé sous le compartiment (15) de formation des balles.

2. Machine selon la revendication 1, caractérisée en ce que le poussoir (A) et la rampe de lancement (C) sont montés sur un châssis (21) solidaire du bâti de la machine et qu'ils sont mobiles en rotation, le poussoir (A) pivotant vers la sortie du compartiment (15) de travail et la rampe (C) s'inclinant vers le sol lors de l'éjection d'une balle, ladite rampe (C) étant maintenue au repos en position sensiblement horizontale.

3. Machine selon la revendication 2, caractérisée en ce que le poussoir mobile (A) et la rampe de lancement (C) sont rotatifs autour d'axes sensiblement coaxiaux.

4. Machine selon l'une quelconque des revendications 1 à 3, caractérisée en ce que l'extrémité libre du poussoir mobile (A) est munie d'une plaque (20) fixée de façon à ce que l'angle entre les faces de contact avec la balle de la plaque et du poussoir soit obtu.

5. Machine selon l'une quelconque des revendications 1 à 4, caractérisée en ce que la rampe de lancement (C) est constituée de bras de lancement (25) et en ce que l'extrémité libre de ces bras est munie de patins (28) de forme arrondie disposés en bout et sur la face inférieure de ces bras.

6. Machine selon la revendication 5, caractérisée en ce que les bras de lancement (25) sont rendus solidaires.

7. Machine selon l'une quelconque des revendications 1 à 6, caractérisée en ce que les organes d'entraînement (B) comprennent deux ensembles disposés symétriquement de chaque côté de la machine, chacun d'entre eux comportant un bras mobile (32) articulé sur le bâti de la machine, une chaîne (31) réglable en longueur reliant le poussoir mobile (A) à l'extrémité libre du bras mobile (32) et une tige de liaison réglable en longueur (34), articulée d'une part sur le bras mobile (32) entre ses deux extrémités et d'autre part sur la porte (16).

8. Machine selon l'une quelconque des revendications 1 à 6, caractérisée en ce que les organes d'entraînement comprennent deux ensemble disposés symétriquement de chaque côté de la machine, chacun d'entre eux comportant une tige (34) articulée sur la porte (16) et un dispositif de liaison (70) entre le poussoir mobile (A) et cette tige (34) permettant à la tige de se translater sans entraîner le poussoir (A), sur une distance limitée déterminée.

9. Machine selon l'une quelconque des revendications 1 à 6, caractérisée en ce que les organes d'entraînement (B) du poussoir mobile (A) comprennent au moins un vérin hydraulique (42) dont l'une des extrémités s'articule sur le châssis (21) de l'éjecteur et l'autre sur le poussoir mobile (A), la course de ce dernier étant réglable par déplacement de son point d'articulation avec le piston hydraulique, celui-ci étant relié à une source de pression par l'intermédiaire d'un distributeur commandé manuellement.

10. Machine selon l'une quelconque des revendications 1 à 6, caractérisé en ce que les organes d'entraînement (B) du poussoir mobile (A) comprennent au moins un vérin hydraulique (42) dont l'une des extrémités s'articule sur le châssis (21) de l'éjecteur et l'autre sur le poussoir mobile (A), la course de ce dernier étant réglable par déplacement de son point d'articulation avec le piston hydraulique, celui-ci étant relié à une source de pression par l'intermédiaire d'une électrovanne (40) commandée par un contact (41) fermé puis ouvert après un débattement initial réglable de la porte (16) au cours de son ouverture puis de sa fermeture.

## Claims

1. An agricultural baling machine (10) which forms substantially round bales of fodder, of the kind comprising a compartment (15) for forming bales comprising a door in the form of a chamber (16) articulated about a horizontal shaft situated in its upper portion and controlled by an opening and closing device; the said machine also comprising an ejector, adapted to push a formed bale out of the machine, comprising a movable pushing device, means for moving the said pushing device towards the outlet of the compartment (15) for forming bales, and a ramp for throwing the bale to the ground disposed at the outlet of the compartment, this machine being characterized in that the movable pushing device (A) of the ejector (20) is disposed under the compartment (15) for forming bales.

2. A machine according to claim 1, characterized in that the pushing device (A) and the throwing ramp (C) are mounted on a chassis (21) fixed to the frame of the machine and are movable in rotation, the pushing device (A) pivoting towards the outlet of the working compartment (15) and the ramp (C) tilting down towards the ground during the ejection of a bale, the said ramp (C) being held in a substantially horizontal position when at rest.

3. A machine according to claim 2, characterized in that the movable pushing device (A) and the throwing ramp (C) are rotatable about substantially coaxial shafts.

4. A machine according to any one of claims 1 to 3, characterized in that the free end of the movable pushing device (A) is equipped with a plate (20) fixed in such a way that the angle between the faces of the plate and the pushing device in contact with the bale is obtuse.

5. A machine according to any one of claims 1 to 4, characterized in that the throwing ramp (C) is constituted by throwing arms (25) and in that the free ends of these arms are equipped with rounded feet (28) disposed at the end on the lower surface of the arm.

6. A machine according to claim 5, characterized in that the throwing arms (25) are fixed together.

7. A machine according to any one of claims 1 to 6, characterized in that the moving means (B) comprise two assemblies disposed symmetrically on either side of the machine, each of them comprising a movable arm (32) articulated on the frame of the machine, a chain (31), the length of which can be adjusted, connecting the movable pushing device (A) to the free end of the movable arm (32), and a connecting rod (34), the length of which can be adjusted, articulated on the one hand on the movable arm (32) between its two ends and, on the other hand, on the door (16).

8. A machine according to any one of claims 1 to 6, characterized in that the moving means comprise two assemblies disposed symmetrically on either side of the machine, each of them comprising a rod (34) articulated on the door (16), and a connecting device (70) between the movable pushing device (A) and this rod (34) allowing the rod to move in translation over a predetermined limited distance without moving the pushing device (A).

9. A machine according to any one of claims 1 to 6, characterized in that the moving means (B) of the movable pushing device (A) comprise at least one hydraulic jack (42) one of the ends of which is articulated on the chassis (21) of the ejector and the other on the movable pushing device (A), the path of movement of the latter being adjustable by displacement of its point of articulation with the hydraulic piston, the latter being connected to a pressure source through the intermediary of a manually controlled distributor.

10. A machine according to any one of claims 1 to 6, characterized in that the moving means (B) of the movable pushing device (A) comprise at least one hydraulic jack (42) one of the ends of which is articulated on the chassis (21) of the ejector and the other on the movable pushing device (A), the path of movement of the latter being adjustable by displacement of its point of articulation with the hydraulic piston, the latter being connected to a pressure source through the intermediary of solenoid valve (40) controlled by a contact switch (41) which is closed then opened after an adjustable, initial displacement of the door (16) during its opening and then during its closing.

**Ansprüche**

1. Landwirtschaftliche Sammelpreßmaschine (10) zum Formen von im wesentlichen runden Futtermittelballen mit einem Abteil (15) zur Bildung der Ballen, welches eine Tür in Form eines Kastens (16) aufweist, die um eine an ihrem oberen Teil befindliche, horizontale Achse schwenkbar ist und die von einer Vorrichtung zum Öffnen und Schließen betätigt wird, mit einer Ausstoßvorrichtung zum Herausstoßen eines fertiggestellten Ballens, die einen beweglichen Drücker, Organe zum Antreiben des Drückers gegen den Auslaß des Abteils (15) zur Bildung der Ballen und eine am Auslaß des Abteils angeordnete Rampe zum Auswerfen der Ballen auf den Boden umfaßt, dadurch gekennzeichnet, daß der bewegliche Drücker (A) der Ausstoßvorrichtung (20) unter dem Abteil (15) zur Bildung der Ballen angeordnet ist.

2. Maschine nach Anspruch 1, dadurch gekennzeichnet, daß der Drücker (A) und die Rampe (C) zum Auswerfen auf einem mit einem Rahmen der Maschine gemeinsamen Gestell (21) montiert sind und daß sie drehbeweglich sind, wobei der Drücker (A) gegen den Auslaß des Arbeits-Abteils (15) schwenkbar ist und die Rampe (C) während des Ausstoßens eines Ballens sich gegen den Boden neigt, wobei die Rampe (C) in Ruhe in einer im wesentlichen horizontalen Lage gehalten ist.

3. Maschine nach Anspruch 2, dadurch gekennzeichnet, daß der bewegliche Drücker (A) und die Rampe (C) zum Auswerfen um im wesentlichen koaxiale Achsen drehbar sind.

4. Maschine nach einem der Ansprüche 1 bis 3, dadurch gekennzeichnet, daß das freie Ende des beweglichen Drückers (A) mit einer Platte versehen ist, die so befestigt ist, daß der Winkel zwischen den Kontaktflächen der Platte und des Drückers mit dem Ballen stumpf ist.

5. Maschine nach einem der Ansprüche 1 bis 4, dadurch gekennzeichnet, daß die Rampe (C) zum Auswerfen von Armen (25) zum Auswerfen gebildet ist und daß die freien Enden der Arme mit abgerundeten Klötzen ausgestattet sind, welche am Ende und auf der unteren Fläche der Arme angeordnet sind.

6. Maschine nach Anspruch 5, dadurch gekennzeichnet, daß die Arme (25) zum Auswerfen fest miteinander verbunden sind.

7. Maschine nach einem der vorhergehenden Ansprüche, dadurch gekennzeichnet, daß die Organe (B) zum Antreiben zwei symmetrisch auf jeder Seite der Maschine angeordnete Aggregate aufweist, von denen jedes einen beweglichen Arm (32), der an dem Maschinenrahmen angelenkt ist, eine in der Länge verstellbare Kette (3l), die den beweglichen Drücker (A) mit dem freien Ende des beweglichen Arms (32) verbindet, und eine Verbindungsstange (34) mit verstellbarer Länge umfaßt, die einerseits auf dem beweglichen Arm (32) zwischen seinen Enden und andererseits an der Tür (16) angelenkt ist.

8. Maschine nach einem der Ansprüche 1 bis 6, dadurch gekennzeichnet, daß die Organe zum Antreiben zwei symmetrisch auf jeder Seite der Maschine angeordnete Aggregate umfaßt, von denen jedes eine an der Tür (16) angelenkte Stange (34) und eine Verbindungsvorrichtung (70) zwischen dem beweglichen Drücker (A) und der Stange (34) umfaßt, wobei die Verbindungsvorrichtung eine Verschiebung der Stange ohne Antrieb des Drückers (A) über eine festgelegte begrenzte Strecke zuläßt.

9. Maschine nach einem der Ansprüche 1 bis 6, dadurch gekennzeichnet, daß die Organe (B) zum Antreiben des beweglichen Drückers (A) wenigstens eine hydraulische Kolben-Zylinder-Anordnung (42) umfassen, deren eines Ende am Gestell (21) der Ausstoßvorrichtung und das andere am beweglichen Drücker (A) angelenkt ist, wobei der Hub des letzteren durch eine Verschiebung seines Anlenkpunktes mit dem Hydraulikkolben verstellbar ist, wobei dieser mittels eines manuell betätigbaren Verteilers mit einer Druckquelle verbunden ist.

10. Maschine nach einem der Ansprüche 1 bis 6, dadurch gekennzeichnet, daß die Organe (B) zum Antreiben des beweglichen Drückers (A) wenigstens eine hydraulische Winde (42) umfassen, deren eines Ende an dem Gestell (21) und das andere am beweglichen Drücker (A) angelenkt ist, wobei der Hub des letzteren durch eine Verschiebung seines Anlenkpunktes mit dem hydraulischen Kolben verstellbar ist, wobei dieser mit einer Druckquelle mittels eines Elektroschiebers (40) verbunden ist, der durch einen Kontakt (41) gesteuert ist, welcher nach einer anfänglichen einstellbaren Schwenkung der Tür (16) während ihres Öffnens geschlossen ist, dann nach der gleichen Schwenkung der Tür (10) während ihres Schließens offen ist.

FIG.1

FIG.2

FIG.3

FIG.4

FIG.5

FIG.6

FIG.7

FIG.9

FIG.8